# EUROPÄISCHE PATENTSCHRIFT

(11) **EP 4 275 472 B1**
(45) Veröffentlichungstag und Bekanntmachung des Hinweises auf die Patenterteilung: **27.08.2025**
(21) Anmeldenummer: 23161682.2
(22) Anmeldetag: 14.03.2023
(51) Int. Cl.: A01D 41/127, A01D 43/08, G01N 21/359, G01N 21/84, G01N 21/85

(54) **ERNTEMASCHINE MIT NIR-TRANSMISSIONSMESSVORRICHTUNG ZUR ERFASSUNG VON INHALTSSTOFFEN EINER ERNTEPROBE**
HARVESTING MACHINE WITH NIR-TRANSMISSION MEASURING DEVICE TO DETECT THE INGREDIENTS OF A CROP SAMPLE
MACHINE DE RÉCOLTE AVEC UN APPAREIL DE MESURE NIR-TRANSMISSIONS POUR DÉTECTER LES INGRÉDIENTS D'UN ÉCHANTILLON DE RÉCOLTE

(30) Priorität: 13.05.2022 DE 102022112043
(43) Veröffentlichungstag der Anmeldung: 15.11.2023
(73) Patentinhaber: CLAAS Selbstfahrende Erntemaschinen GmbH, 33428 Harsewinkel (DE)
(72) Erfinder: Nalbach, Marc, 33102 Paderborn (DE); Marbach, Ralf, 33775 Versmold (DE)
(74) Vertreter: CLAAS Gruppe

(56) Entgegenhaltungen:
- EP-A1- 2 119 339
- EP-A1- 2 168 419
- EP-A1- 3 991 544
- DE-A1- 19 648 126
- DE-C1- 10 236 515
- US-B1- 6 559 655

## Beschreibung

Die vorliegende Erfindung betrifft eine Erntemaschine gemäß dem Oberbegriff des Anspruches 1. Weiterhin betrifft die Erfindung ein Verfahren zur Analyse von silierfähigen Erntegut, welches von einer Erntemaschine aufgenommen wird, gemäß dem Oberbegriff des Anspruches 13.

Die chemische Analyse von silierfähigem Erntegut ist in der Landwirtschaft schon länger relevant. Bei silierfähigem Erntegut kann es sich zum Beispiel um Mais und Gras handeln, das von einem Feldhäcksler, einer Ballenpresse oder einem Ladewagen zur Silierung geerntet bzw. aufgenommen wird. Chemisch analysiert werden dabei im Wesentlichen Inhaltsstoffe, primär die Feuchte, die im Allgemeinen in Prozent der Gesamtmasse angegeben wird. Relevant sind jedoch auch andere Inhaltsstoffe, wie Proteine und Zucker, die in der Regel in Prozent der Trockenmasse angegeben werden und abstraktere Merkmale des silierfähigen Ernteguts wie beispielsweise die Verdaulichkeit für Nutztiere.

Eine Erntemaschine der eingangs genannten Art ist aus der EP 2 119 339 B1 bekannt. Ein an eine Häckselvorrichtung angeschlossener Kanal wird im Erntebetrieb von Erntegutresten durchströmt. Um die Inhaltsstoffe der Erntegutreste, die in der Regel zur Bioenergieerzeugung oder als Viehfutter verwendet werden, zu erfassen, ist dem Kanal eine Messanordnung zugeordnet. Die Messanordnung umfasst einen Abzweigkanal, der von einer Öffnung im Kanal ausgeht. An dem Abzweigkanal ist eine Messeinrichtung angeordnet. Die Messeinrichtung umfasst ein Nahinfrarotspektrometer vorzugsweise ohne bewegliche optische Elemente, welches mit einer breitbandigen Lichtquelle, die durch ein transparentes Fenster eine im Abzweigkanal enthaltene Probe bestrahlt, und einem Analysator ausgestattet ist, der von der Probe reflektiertes Licht durch ein dispersives Element spektral zerlegt und in unterschiedliche Richtungen ablenkt, während ein Detektor die Intensität des dispergierten Lichts ortsspezifisch erfasst. Die Messeinrichtung ist mit einem Rechner verbunden, der anhand der erfassten Spektren die Inhaltsstoffe der Probe ermittelt. Da die optischen Pfadlängen in der Probe bei der Reflektionsmessung kurz sind, werden Wellenlängen größer 1 Mikrometer verwendet, wozu kostenintensive Photodetektoren, insbesondere Indiumgalliumarsenid-Photodiodenzeilen (InGaAs-Photodiodenzeilen), zur Anwendung kommen.

Eine andere Vorrichtung zur Erfassung von Inhaltsstoffen eines Erntegutstroms ist aus der EP 2 168 419 A1 bekannt. Dabei wird ein Bypassstrom eines Erntegutstroms gebildet und mit einer NIR-Messvorrichtung analysiert, wobei die Messvorrichtung als Transmissionsvorrichtung ausgestaltet ist.

Der Erfindung liegt somit die Aufgabe zugrunde, eine Erntemaschine der eingangs genannten Art sowie ein Verfahren zur Analyse von silierfähigem Erntegut, welches von einer Erntemaschine aufgenommen und als ein entlang eines Guttransportweges geführter Gutstrom durchlaufen wird, weiterzubilden, wodurch eine kostengünstigere Durchführung einer online-Analyse des Erntegutes erreicht wird.

Diese Aufgabe wird aus vorrichtungstechnischer Sicht durch eine Erntemaschine ausgehend vom Oberbegriff des Anspruchs 1 in Verbindung mit dessen kennzeichnenden Merkmalen gelöst. Die hierauf folgenden abhängigen Ansprüche geben jeweils vorteilhafte Weiterbildungen der Erfindung wieder. Aus verfahrenstechnischer Sicht erfolgt eine Lösung der Aufgabe durch die technischen Merkmale des nebengeordneten Anspruchs 13.

Gemäß dem Anspruch 1 wird eine Erntemaschine mit zumindest einem Arbeitsaggregat zur Bearbeitung von silierfähigem Erntegut, welches die Erntemaschine als ein entlang eines Guttransportweges geführter Gutstrom durchläuft, einer Bypass-Vorrichtung, die zur Entnahme und Rückführung eines Probestroms aus dem Gutstrom eingerichtet ist, sowie einer Steuereinheit vorgeschlagen, wobei die Bypass-Vorrichtung eine NIR-Messvorrichtung zur Erfassung von Inhaltsstoffen des entnommenen Probestroms umfasst, wobei die Steuereinheit dazu eingerichtet ist, von der NIR-Messvorrichtung generierte Signale auszuwerten. Erfindungsgemäß ist vorgesehen, dass die NIR-Messvorrichtung als Transmissonsvorrichtung ausgeführt ist.

Wesentlich ist die Überlegung, dass für die Transmissionsmessvorrichtung zur Durchführung von on-line Transmissionsmessungen eine Silizium-Photodiodenzeile (Si-Photodiodenzeile) verwendet wird, welche kostengünstiger als eine InGaAs-Photodiodenzeile ist. Die Transmissionsmessvorrichtung mit Si-Photodiodenzeile arbeitet mit Wellenlängen zwischen 700 Nanometer bis 1050 Nanometer, insbesondere unterhalb von 1 Mikrometer. Die Transmissionsmessung ermöglicht es, gegenüber der Reflexionsmessung eine günstigere Photodiodenzeile einzusetzen, ohne dabei wegen des Wellenlängenbereiches auf die Detektion von Feuchtigkeit im Probenmaterial beschränkt zu sein, wie dies bei der Reflexionsmessung mit Si-Photodiodenzeile der Fall wäre. Die Transmissionsmessvorrichtung deckt somit neben der Detektion des Feuchtigkeitsgehaltes respektive der Trockenmasse die Detektion weiterer Inhaltsstoffe im Erntegut ab, wie beispielsweise Proteine, Zucker oder Fett.

Ein Vorteil der Bypass-Vorrichtung besteht darin, dass eine Förderung des Gutstroms in der Bypass-Vorrichtung für die Dauer einer Messung angehalten werden kann. Dies ermöglicht das Messen einer stehenden Probe.

Darüber hinaus kann das Auftreten von sogenannten "Pinholes" in der Probe, nachfolgend auch als Pinhole-Problem bezeichnet, vermieden werden, indem geeignete Maßnahmen zu deren Vermeidung durchgeführt werden. Pinholes beschreiben einzelne Bereiche im Probenmaterial, durch welche Transmissionslicht direkt und ungeschwächt, d.h. ohne jegliche Absorption durch das Probenmaterial, in gerader Linie hindurchscheinen kann. Transmissionslicht, welches Pinholes passiert, führt dazu, dass die Messung für eine quantitative Analyse unbrauchbar wird. Ursächlich für Pinholes ist, dass das Füllen der Durchströmzelle mit Teilchen bzw. Partikeln zwischen zwei Füllvorgängen Schwankungen unterliegt.

Dabei kann die Transmissionsvorrichtung mindestens eine optische Strahlungsquelle, insbesondere Lichtquelle, und mindestens einen optischen Sensor, insbesondere Lichtsensor, aufweisen.

Weiterhin kann die Bypass-Vorrichtung zumindest eine von dem Probestrom durchströmte Durchströmzelle umfassen, welche zumindest abschnittsweise zwischen der mindestens einen optischen Strahlungsquelle und dem mindestens einen optischen Sensor angeordnet ist.

Erfindungsgemäß ist der Transmissonsvorrichtung eine Zerkleinerungsvorrichtung vorgeschaltet, welche dazu eingerichtet ist, das in dem Probestrom enthaltene Erntegut vor der Zuführung in die Transmissonsvorrichtung zu zerkleinern. Abhängig von der Ausführung der Erntemaschine sowie der Betriebsparameter, mit denen die Erntemaschine betrieben wird, weist das Erntegut im Gutstrom verschiedene Teilchengrößen auf, welche für die Messung zu groß sein können. Ein weiterer Aspekt ist die Inhomogenität der Größenverteilung von Teilchen, wodurch die Genauigkeit der Messung negativ beeinflusst wird. Das Vorschalten der Zerkleinerungsvorrichtung hat den Vorteil, dass das Erntegut vor der Zuführung in die Transmissionsvorrichtung aufbereitet wird. Dabei kann der Faktor für die Zerkleinerung bei etwa 1:10 liegen, d.h., die typische Masse eines Partikels ist zehnmal kleiner als die eines Teilchens. Insbesondere ist das Erntegut im Probestrom nach dem Durchlaufen der Zerkleinerungsvorrichtung hinsichtlich seiner Größenverteilung homogener. Weitere Vorteile des Prozessschrittes Zerkleinerung sind die Verbesserung der Fließfähigkeit sowie die Reduzierung des Verstopfungsrisikos in der Bypass-Vorrichtung, insbesondere der Durchströmzelle. Durch die Verwendung der Zerkleinerungsvorrichtung wird eine Reduzierung der mittleren Masse der Teilchen/Partikel erreicht. Zudem wird die Maximalgröße der Partikel limitiert, welche der Durchströmzelle zugeführt werden. Dadurch wird das Risiko einer Verstopfung im weiteren System reduziert. Weiterhin kann durch das vorgeschaltete Zerkleinern das Pinhole-Problem signifikant reduziert werden. Ein weiterer Vorteil der Verwendung der Zerkleinerungsvorrichtung ergibt sich, wenn die Durchströmzelle selbstreinigend ausgeführt ist. Der mechanische Druck, den der durch die Durchströmzelle bewegte Probestrom ausübt, verteilt sich gleichmäßiger auf die durchsichtigen Wände der Durchströmzelle.

Die Zerkleinerungsvorrichtung kann zur mechanischen Zerkleinerung durch Schneiden eingerichtet sein. Hierzu kann die Zerkleinerungsvorrichtung rotierende Messer umfassen. Vorteilhaft dabei ist, dass sowohl die Temperaturerhöhung als auch der Druck auf die Teilchen im Probenmaterial minimal sind und der Feuchtegehalt des Probenmaterials sich deshalb praktisch nicht ändert.

Erfindungsgemäß ist der Transmissonsvorrichtung eine Teilungsvorrichtung zur Aufteilung des Probestroms in einen Messstrom und einen Überlaufstrom vorgeschaltet, wobei die Teilungsvorrichtung dazu eingerichtet ist, das Verhältnis der Aufteilung in den Messstrom und den Überlaufstrom zu variieren. Insbesondere kann die Teilungsvorrichtung der Zerkleinerungsvorrichtung nachgeschaltet angeordnet sein. Der Teilungsfaktor der Teilungsvorrichtung kann bevorzugt im Bereich 1:1 bis 1:10 liegen. Insbesondere kann sich der Teilungsfaktor während des Betriebes selbstregulierend ändern. Die Teilungsvorrichtung ist dazu eingerichtet, durch die selbstregulierende Einstellung des Teilungsfaktors der Durchströmzelle einen nur limitiert schwankenden Gutstrom zuzuführen. Hierdurch kann das Auftreten von Verstopfungen vermieden bzw. das Risiko von Verstopfungen minimiert werden. Zudem lässt sich dadurch erreichen, dass in der Durchströmzelle im Wesentlichen konstante Bedingungen vorliegen. Insbesondere kann der Durchströmzelle stets der gleiche Volumenstromanteil bzw. Massenstromanteil an Probenmaterial zugeführt werden, welcher für Repräsentanz und statistische Güte der Probe erforderlich sind.

Hierbei kann die Teilungsvorrichtung einen Überlaufkanal umfassen, durch welchen der Überlaufstrom in den Gutstrom zurückgeführt wird. Dabei kann der Überlaufstrom kontinuierlich gefördert werden, während die Förderung des Messstroms temporär für die Dauer der Transmissionsmessung unterbrochen werden kann.

Weiterhin kann ein aus dem Messstrom und dem Überlaufstrom, nur dem Messstrom oder nur dem Überlaufstrom bestehender Rücklaufstrom einem an der Erntemaschine lösbar angeordneten Behältnis zuführbar sein, dessen Probeninhalt einer "at-line" Analyse unterziehbar ist bzw. unterzogen wird. Mit "at-line" Analyse ist die Analyse einer Probe in einem externen Labor bezeichnet.

Insbesondere kann die Bypass-Vorrichtung dazu eingerichtet sein, den Volumenstromanteil des entnommenen Probestroms, insbesondere während der Durchführung der Messung, zu verändern. Dabei kann eine Abzweigung des Probestromes durch eine Abzweigvorrichtung aus dem Gutstrom im Verhältnis von 1:100 bis 1:1000 erfolgen. Das Verhältnis der Abzweigung durch die Abzweigvorrichtung kann im laufenden Betrieb der Erntemaschine angepasst werden.

Vorzugsweise kann die Transmissionsvorrichtung nach dem Dunkelfeldprinzip arbeiten, als Sphären-Transmissionsvorrichtung oder mit zu planparallelen Wänden der Durchströmzelle senkrecht orientierter optischer Strahlungsquelle und optischem Sensor ausgeführt sein. Mittels einer der in Anspruch 8 genannten Ausführungsformen der Transmissionsvorrichtung kann erreicht werden, dass die Anforderung an die Größe der Probenmasse, die für die Erzeugung eines statistisch guten on-line Samples erforderlich ist, mit dem in der Praxis maximal realisierbaren Massedurchfluss durch die Durchströmzelle in Einklang gebracht wird.

Die nach dem Dunkelfeldprinzip arbeitende Transmissionsvorrichtung als eine Ausführungsform der NIR-Messvorrichtung hat den Vorteil, dass von dem wenigstens einen optischen Sensor Transmissionslicht nur dann empfangen wird, wenn sich Probenmaterial in der Durchströmzelle befindet und deshalb eine Lichtstreuung vorliegt. Vorteil dieser Lösung ist die vollständige Eliminierung des Pinhole-Effektes, d.h. diese Anordnung ist auch bei größeren Teilchen/Partikeln einsetzbar.

Die Sphären-Transmissionsvorrichtung als eine Ausführungsform der Transmissionsvorrichtung optimiert das Signal/Rausch-Verhältnis der Spektren, eliminiert das Pinhole-Problem und vereinfacht die multivariate Kalibrierung, d.h. die Nutzung von Absorptionswerten bei mehreren Wellenlängen, um die Konzentration eines Stoffes zu bestimmen. Hierbei kann die Durchströmzelle in einer Ulbricht-Kugel angeordnet sein.

Die Ausführungsform der Transmissionsvorrichtung als konventionelle ausgeführte Transmissionsvorrichtung mit zu den planparallelen Wänden der Durchströmzelle senkrecht orientierter optischer Strahlungsquelle und optischem Sensor hat den Vorteil einer größeren Pfadlänge gegenüber der Ausführung der Transmissionsvorrichtung als Sphären-Transmissionsvorrichtung. Zudem kann auf den Einsatz der Zerkleinerungsvorrichtung verzichtet werden, da der Sphären-Transmissionsvorrichtung abgezweigte Probestrom zugeführt werden kann.

Bevorzugt kann in der Durchströmzelle eine federbelastete Anordnung zur Verdichtung des zugeführten Probestroms angeordnet sein. Die federbelastete Anordnung dient dazu, auf einen zugeführten Probestrom zu reagieren, welcher einen für Repräsentanz und statistische Güte definierten Massenstromwert überschreitet. Überschreitet der Probestrom den definierten Massenstromwert, erfährt die federbelastete Anordnung durch den Probestrom eine Auslenkung senkrecht zur Durchströmungsrichtung. Die von der federbelasteten Anordnung ausgeübte Druckkraft minimiert das Pinhole-Problem, indem das in die Durchströmzelle eintretende Probematerial verdichtet wird. Die federbelastete Anordnung kann als ein plattenförmiges Bauteil ausgeführt sein, welches sich in Längs- und Querrichtung der Durchströmzelle erstreckt. Das plattenförmige Bauteil bildet zuführseitig der Durchströmzelle eine Begrenzung des Probestroms. Auf seiner dem Probestrom abgewandten Oberseite des plattenförmigen Bauteils sind Druckfedern angeordnet, deren Federkraft senkrecht auf das Probenmaterial respektive den Probestrom oder Messstrom einwirkt.

Dabei kann ein durch die optische Strahlungsquelle erzeugter Beleuchtungsfleck nur einen Teilbereich der Durchströmzelle bestrahlen, welcher sich in Abhängigkeit vom zugeführten Probestrom stets unterhalb der federbelasteten Anordnung befindet. Der Beleuchtungsfleck befindet sich nur in dem Teil der Durchströmzelle, welcher immer mit Probenmaterial gefüllt ist, d.h. die Transmissionsmessung passiert nur in dem Teil der Durchströmzelle, welcher immer mit Probenmaterial gefüllt ist. Das Probenmaterial in der Durchströmzelle kann diese fortlaufend als Probestrom passieren oder intermittierend, d.h. die Zuführung des Probestroms wird während der Transmissionsmessung unterbrochen. Dies hat in Verbindung mit der federbelasteten Anordnung den zusätzlichen Effekt, dass eine optische Teilung bewirkt wird. Diese optische Teilung kann die mechanische Teilung mittels der Teilungsvorrichtung ersetzten. Indem der Beleuchtungsfleck nur den Teil der Durchströmzelle, welcher immer mit Probenmaterial gefüllt ist, bestrahlt, kann erreicht werden, dass im Wesentlichen konstante Bedingungen in der Durchströmzelle vorliegen, um die Anforderungen an Repräsentanz und statistische Güte der Probe zu gewährleisten.

Gemäß einer bevorzugten Weiterbildung kann die Bypass-Vorrichtung eine durch einen Aktor angetriebene Fördervorrichtung umfassen, welche den aus dem Gutstrom entnommenen Probestrom mit silierfähigem Erntegut der Transmissionsvorrichtung mit einer einstellbaren Fördergeschwindigkeit aktiv zuführt. Bevorzugt kann die Fördervorrichtung als Schraubenförderer oder Schneckenförderer ausgeführt sein. Vorzugsweise kann die Fördervorrichtung in die Abzweigungsvorrichtung und/oder die Teilungsvorrichtung integriert sein.

Dabei kann der Transmissionsvorrichtung zumindest eine optische Geschwindigkeitssensoranordnung vorgeschaltet sein, welche zur Überwachung der Fördergeschwindigkeit des Probestroms eingerichtet ist.

Weiterhin kann die Steuereinheit dazu eingerichtet sein, zumindest die Fördergeschwindigkeit durch Ansteuerung des Aktors in Abhängigkeit von einer Mindestteilchenzahl im Probestrom zu verändern. Dies dient dazu, die für eine den Genauigkeitsanforderungen an die on-line Messung ausreichende Mindestteilchenzahl der Transmissionsvorrichtung zuzuführen.

Insbesondere kann die optische Strahlungsquelle weißes Licht oder monochromatisches Licht aussenden, wobei zwischen der Strahlungsquelle und der Durchströmzelle ein Monochromator oder zwischen der Durchströmzelle und dem optischen Sensor ein Spektrometer angeordnet ist.

Des Weiteren kann die Transmissonsvorrichtung dazu eingerichtet sein, von der Strahlungsquelle ausgesandtes Licht und/oder auf der Lichtaustrittsseite austretendes transmittierendes Licht optisch zu mischen. Zur Minimierung spektraler Fehler kann vorgesehen sein, die Lichtaustrittsfläche der Durchströmzelle nicht direkt, z.B. auf den Eingangsspalt eines Spektrographen, abzubilden, sondern optisch zu mischen, so dass die unter Umständen inhomogene Lichtverteilung in der Ebene der Lichtaustrittsfläche in eine uniforme Verteilung in der Ebene des Eintrittsspaltes gemischt wird. Für die optische Mischung können beispielsweise eine Köhler-Optik, einen Compound Parabolic-Concentrator, ein Mikrolinsen-Array, Mixerstäbe, oder Streuscheiben eingesetzt werden. Zusätzlich kann auf der Beleuchtungsseite der Durchströmzelle der Beleuchtungsfleck auf der Probe eine im Wesentlichen uniforme Beleuchtungsstärke aufweisen. Hierzu können, neben den zur optischen Mischung bereits genannten Komponenten, beispielsweise auch Lampen mit Reflektoren aus Spiegelsegmenten eingesetzt werden. Weiterhin wird die eingangs gestellte Aufgabe durch ein Verfahren gemäß dem nebengeordneten Anspruch 13 gelöst.

Die vorliegende Erfindung wird nachstehend anhand von in den Zeichnungen dargestellten Ausführungsbeispielen näher erläutert.

Es zeigen:
- Fig. 1: schematisch eine Erntemaschine in Form eines Feldhäckslers;
- Fig. 2: schematisch und exemplarisch strukturellen Aufbau und Funktionsprinzip einer Bypass-Vorrichtung der Erntemaschine;
- Fig. 3: schematisch eine NIR-Messvorrichtung mit einer "straight-through" Transmissionsvorrichtung;
- Fig. 4: schematisch eine NIR-Messvorrichtung mit einer nach dem Dunkelfeldprinzip arbeitenden Transmissionsvorrichtung; und
- Fig. 5: schematisch eine als Sphären-Transmissionsvorrichtung ausgeführte NIR-Messvorrichtung.

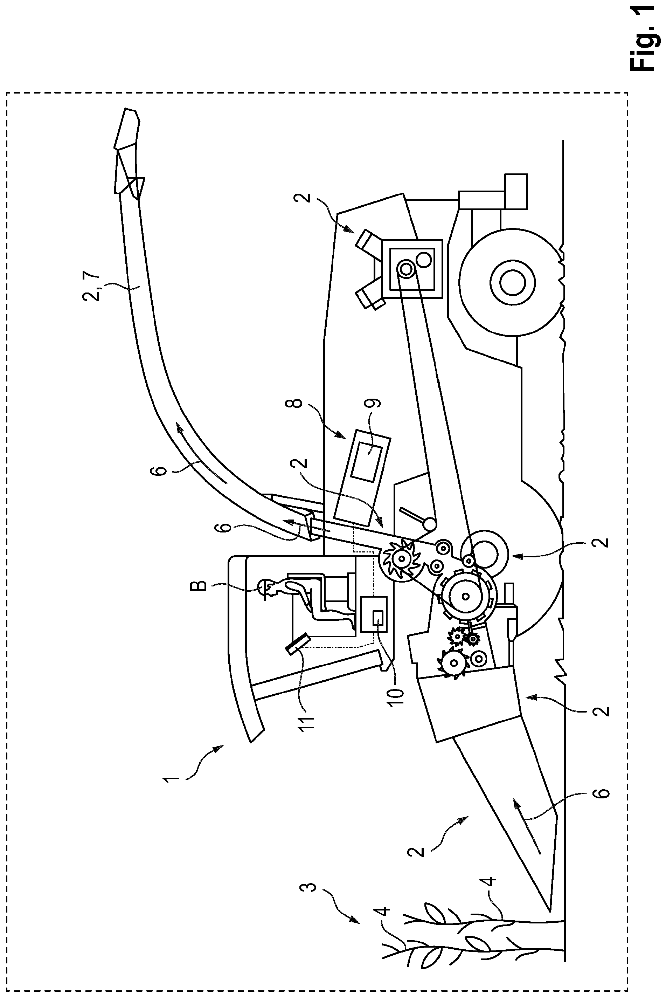

Fig. 1 stellt eine Erntemaschine 1 in Form eines Feldhäckslers dar. Die Erntemaschine kann beispielsweise auch als Ballenpresse ausgeführt sein. Die Erntemaschine 1 weist mindestens ein Arbeitsaggregat 2 auf. Die Erntemaschine 1 dient zum Abernten und/oder Aufnehmen eines Feldbestands 3. Das mindestens eine Arbeitsaggregat 2 dient zur Verarbeitung von silierfähigem Erntegut 4, welches insbesondere aus dem Feldbestand 3 gewonnen wird. Silierfähiges Erntegut ist unter anderem Silomais, Siloroggen, Gras, und Luzerne.

Das silierfähige Erntegut 4 wird im Betrieb der Erntemaschine 1 in einem Gutstrom 5 entlang eines Guttransportweges 6 durch die Erntemaschine 1 transportiert. Der Guttransportweg 6 kann bei einem als Vorsatzgerät zur Aufnahme des Feldbestandes 3 ausgeführten Arbeitsaggregat 2, wie in Fig. 1 gezeigt, beginnen. Der Gutstrom 5 kann insbesondere an einer Ausgabevorrichtung, bei einer als Feldhäcksler ausgeführten Erntemaschine 1 an einem als Auswurfkrümmer 7 ausgeführten Arbeitsaggregat 2, der Erntemaschine 1 enden. Weitere Arbeitsaggregate 2 der Erntemaschine, die entlang des Guttransportweges 6 angeordnet sind, können eine Einzugsvorrichtung, eine Häckselvorrichtung, eine optionale Konditioniereinrichtung sowie eine Nachbeschleunigervorrichtung sein.

Zur Messung von Inhaltsstoffen des landwirtschaftlichen Erntegutes 4 weist die Erntemaschine 1 eine Bypass-Vorrichtung 8 auf, die an dem Guttransportweg 6 angeordnet ist. Die Bypass-Vorrichtung 8 ist mit einer in der Erntemaschine 1 angeordneten Steuereinheit 10 verbunden. Ein mit der Steuereinheit 10 verbundenes Benutzerterminal 11 dient zur Interaktion mit einem Benutzer B der Erntemaschine 1. Die Bypass-Vorrichtung 8 ist zur Entnahme und Rückführung eines Probestroms 12 aus dem Gutstrom 5 eingerichtet. Die Bypass-Vorrichtung 8 umfasst eine NIR-Messvorrichtung 9 zur Erfassung von Inhaltsstoffen des aus dem Gutstrom 5 entnommenen Probestroms 12. Die Steuereinheit 10 ist dazu eingerichtet, von der NIR-Messvorrichtung 9 generierte Signale auszuwerten, um die Inhaltsstoffe des Ernteguts 4 qualitativ und quantitativ zu bestimmen. Die NIR-Messvorrichtung 9 ist als Transmissonsvorrichtung 15 ausgeführt. Wesentlich ist dabei, dass es sich um eine reine Transmissions-Messung handelt.

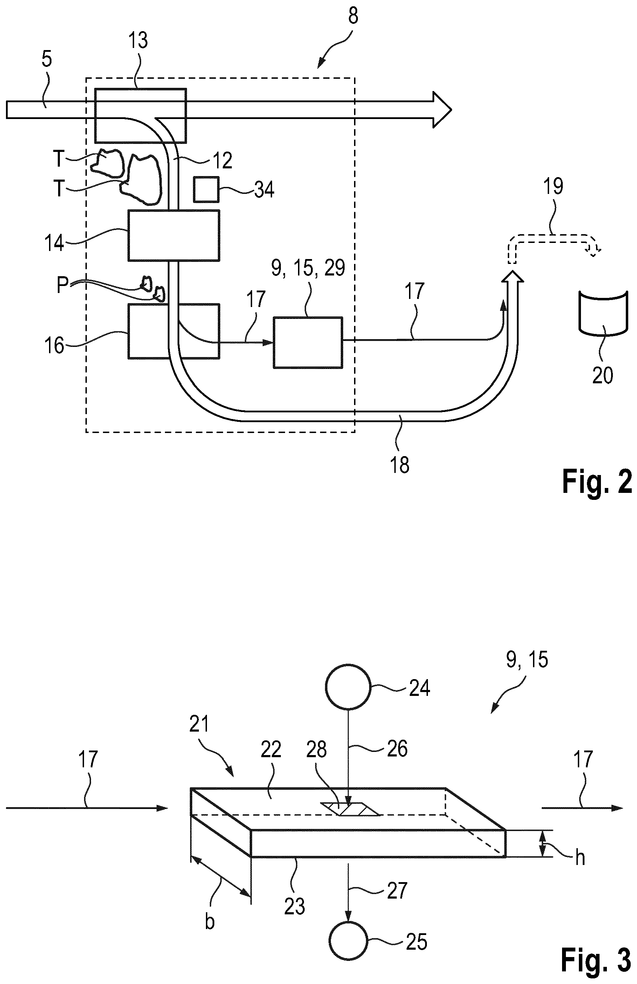

In Fig. 2 sind schematisch und exemplarisch der strukturelle Aufbau und das Funktionsprinzip der Bypass-Vorrichtung 8 der Erntemaschine 1 dargestellt. Die Bypass-Vorrichtung 8 umfasst eine Abzweigvorrichtung 13, welche den Probestrom 12 aus dem Gutstrom 5 abzweigt. Hierzu weist die Abzweigvorrichtung 13 eine durch einen Aktor angetriebene Fördervorrichtung auf, die als Schraubenförderer oder Schneckenförderer ausgeführt sein kann. Dabei kann eine Abzweigung des Probestromes 12 durch die Abzweigvorrichtung 13 aus dem Gutstrom 5 in einem einstellbaren Verhältnis von 1:100 bis 1:1000 erfolgen. Das Verhältnis der Abzweigung kann dabei im laufenden Betrieb der Erntemaschine 1 angepasst werden. Die Einstellung des Verhältnisses der Abzweigung kann manuell durch eine Eingabe des Benutzers B mittels des Bedienterminals 11 erfolgen. Vorzugsweise erfolgt die Einstellung des Verhältnisses der Abzweigung automatisch durch die Steuereinheit 10, welche den Aktor der Fördervorrichtung ansteuert, um die Fördergeschwindigkeit entsprechend dem einzustellenden Verhältnis der Abzweigung anzupassen. Dabei kann der Transmissionsvorrichtung 15 zumindest eine optische Geschwindigkeitssensoranordnung 34 vorgeschaltet sein, welche zur Überwachung der Fördergeschwindigkeit des Probestroms 12 eingerichtet ist.

Von der Abzweigvorrichtung 13 wird der Probestrom 12 einer dieser nachgeordneten Zerkleinerungsvorrichtung 14 zugeführt.

Die Zerkleinerungsvorrichtung 14 ist dazu eingerichtet ist, das in dem Probestrom 12 enthaltene Erntegut 4 vor der Zuführung in die Transmissonsvorrichtung 15 zu zerkleinern. In Abhängigkeit von der Ausführung der Erntemaschine 1, beispielsweise als Feldhäcksler oder als Ballenpresse, sowie der Betriebsparameter, mit denen die Erntemaschine 1 betrieben wird, weist das Erntegut 4 im Probestrom 12 verschiedene Teilchengrößen auf, welche für die Messung durch die Transmissonsvorrichtung 15 zu groß sein können. Ein weiterer Aspekt ist die Inhomogenität der Größenverteilung von Teilchen T, wodurch die Genauigkeit der Messung negativ beeinflusst wird.

Das Vorschalten der Zerkleinerungsvorrichtung 14 hat somit den Vorteil, dass das Erntegut 4 vor der Zuführung in die Transmissionsvorrichtung 15 aufbereitet werden kann. Dabei kann der Faktor für die Zerkleinerung bei etwa 1:10 liegen, d.h., die typische Masse eines Partikels P ist zehnmal kleiner als die eines Teilchens T. Insbesondere ist das von der Zerkleinerungsvorrichtung 14 vorbehandelte Erntegut 4 im Probestrom 12 hinsichtlich seiner Größenverteilung homogener. Weitere Vorteile des Prozessschrittes Zerkleinerung sind die Verbesserung der Fließfähigkeit sowie die Reduzierung des Verstopfungsrisikos in der Bypass-Vorrichtung 8. Durch die Verwendung der Zerkleinerungsvorrichtung wird eine Reduzierung der mittleren Masse der Teilchen T bzw. Partikel P erreicht. Zudem wird die Maximalgröße der Partikel P limitiert, welche der Transmissionsvorrichtung 15 zugeführt werden. Dadurch wird das Risiko einer Verstopfung im weiteren Verlauf der Bypass-Vorrichtung 8 reduziert. Die Zerkleinerung kann auch zur Vermeidung oder zumindest der Minimierung des sogenannten Pinhole-Problems beitragen, indem das Auftreten von partikulären Teilchen in der Größenordnung der Transmissionsvorrichtung 15 vermieden werden kann.

In seltenen Fällen kann der Probestrom 12 der Transmissionsvorrichtung 15 direkt zugeführt werden, oftmals sind jedoch weitere Prozessschritte notwendig. Da der Probestrom 12 oft größer ist als rund 100 gram/s und deshalb nicht in Gänze durch die Transmissionsvorrichtung 15 gefördert werden kann, müssen die Teilchen T des Probestromes 12 zunächst zu Partikeln P zerkleinert werden. Der resultierende Partikelstrom wird dann repräsentativ massenreduziert zu einem Messstrom 17, der störungsfrei durch die Transmissionsvorrichtung 15 förderbar ist. Der Faktor für die Teilchenzerkleinerung liegt im Allgemeinen bei 1:10, d.h., die typische Masse eines Partikels P ist zehnmal kleiner als die eines Teilchens T. Der Faktor der Teilchenzerkleinerung kann durch eine Ansteuerung mittels der Steuereinheit 10 einstellbar sein.

Erfindungsgemäß ist die Anordnung einer der Transmissonsvorrichtung 15 vorgeschalteten Teilungsvorrichtung 16 zur Aufteilung des Probestroms 12 in den Messstrom 17 und einen Überlaufstrom 18. Die Teilungsvorrichtung 16 ist dazu eingerichtet, das Verhältnis der Aufteilung in den Messstrom 17 und den Überlaufstrom 18 zu variieren. Der Messstrom 17 wird der Transmissonsvorrichtung 15 durch einen Messkanal zugeführt, während der Überlaufstrom 18 durch einen Überlaufkanal direkt zum Gutstrom 5 zurückgeführt wird. Der Messstrom 17 wird nach dem Passieren der Transmissonsvorrichtung 15 dem Überlaufstrom 18 zugeführt.

Der Prozessschritt der Zerkleinerung durch die Zerkleinerungsvorrichtung 14 ermöglicht es, die Massenreduzierung im nachfolgenden Prozessschritt Teilung durch die Teilungsvorrichtung 16 auf eine solche Weise durchzuführen, dass der resultierende Messstrom 17 einerseits klein genug ist, um einerseits die Transmissonsvorrichtung 15 störungsfrei zu passieren, andererseits aber auch die wichtigen Anforderungen an die Repräsentanz und statistische Güte der NIR-Probe zu erfüllen, worauf weiter unten noch näher eingegangen wird.

Insbesondere kann ein aus dem Messstrom 17 und dem Überlaufstrom 18, nur dem Messstrom 17 oder nur dem Überlaufstrom 18 bestehender Rücklaufstrom 19 einem an der Erntemaschine 1 angeordneten Behältnis 20 zuführbar sein, dessen Probeninhalt einer "at-line" Analyse, d.h. einer zeitlich entkoppelten Analyse, unterzogen werden kann. Die Verwendung des Rücklaufstroms 19 ist vorteilhaft, da das für Laborproben benötigte Volumen von etwa 2 Litern innerhalb einer oder weniger Sekunden in das Behältnis 20 abfüllt werden kann.

Die aufeinander folgenden Prozesse der Abzweigung durch die Abzweigungsvorrichtung 13, die Zerkleinerung durch die Zerkleinerungsvorrichtung 14 und die Teilung durch die Teilungsvorrichtung 16 laufen bevorzugt als ein kontinuierlicher Prozess ab, so dass die zeitliche Verzögerung zwischen Eingang und Ausgang des Gesamtprozesses zeitstabil und bekannt ist. Dies erleichtert die exakte zeitliche Zuordnung der NIR-Messdaten zum Gutstrom 5, d.h. zum Erntezeitpunkt der Erntemaschine 1. Die Bewegung des der Transmissonsvorrichtung 15 zugeführten Probenmaterials kann aber auch zeitdiskret verlaufen, d.h. in Schüben. Dies kann in Zeitintervallen in der Größenordnung einer oder weniger Sekunden geschehen, womit die Ziele einer on-line Messung, das Messen mit kurzen Zeitabständen von 1 Sekunde bis mehrere Sekunden, vorzugsweise bis zu 10 Sekunden, besonders bevorzugt bis zu 5 Sekunden, und das kontinuierliche Erfassen diese Daten über längere Zeiträume hinweg, weiterhin erreicht werden können.

Wenn ein Überlaufkanal vorliegt, kann auch nur der Messstrom 17 zeitdiskret bewegt werden, während das Material im restlichen System, d.h. der Gutstrom 5 als auch der im Überlaufkanal befindliche Überlaufstrom 18 kontinuierlich weiterfließt. Damit kann das der Transmissonsvorrichtung 15 zugeführte Probenmaterial unabhängig vom restlichen System während der NIR-Messung angehalten werden.

Die Darstellung in Fig. 3 zeigt schematisch eine NIR-Messvorrichtung 9 mit einer "straight-through" Transmissionsvorrichtung 15. Die "straight-through" Transmissionsvorrichtung 15 ist als eine Durchströmzelle 21 mit planparallelen Wänden 22, 23 sowie mit zu den planparallelen Wänden 22, 23 jeweils senkrecht orientierter optischer Strahlungsquelle 24 und optischem Sensor 25 ausgeführt. Die Transmissionsvorrichtung 15 weist mindestens eine optische Strahlungsquelle 24, insbesondere Lichtquelle, und mindestens einen optischen Sensor 25, insbesondere Lichtsensor, auf.

Insbesondere kann die zumindest eine optische Strahlungsquelle 24 weißes Licht oder monochromatisches Licht aussenden, wobei zwischen der Strahlungsquelle 24 und der Durchströmzelle 21 ein Monochromator oder zwischen der Durchströmzelle 21 und dem zumindest einen optischen Sensor 25 ein Spektrometer angeordnet ist.

Die nachfolgenden Ausführungen gelten sowohl für den Fall, dass die Durchströmzelle 21 mit monochromatischem Licht beschienen wird, d.h. zwischen der Strahlungsquelle 24 und der Durchströmzelle 21 ist ein Monochromator angeordnet, als auch für den alternativen Fall, dass die Durchströmzelle 21 mit weißem Licht beschienen wird, und somit ein Spektrometer bzw. Spektrograph zwischen der Durchströmzelle 21 und dem optischen Sensor 25 notwendig wird.

Mit 26 ist das von der als Lichtquelle ausgeführten Strahlungsquelle 24 ausgesandte Licht bezeichnet und mit 27 das transmittierte Licht bzw. Transmissionslicht, welches von dem als Lichtsensor ausgeführten optischen Sensor 25 empfangen wird.

Der Durchmesser eines Beleuchtungsflecks 28, der auf einem Lichtquellenfenster der Durchströmzelle 21 gebildet wird, kann bis zu etwa 25 mm betragen. Die Verwendung von Zylinderoptiken ist möglich und sinnvoll, so dass statt eines runden Beleuchtungsflecks ein in Gutflussrichtung schmales Rechteck als Beleuchtungsfleck 28 geformt werden kann, wie in Fig. 3 dargestellt. Dabei wird durch die Limitationen der verfügbaren Strahlungsleistung der Strahlungsquelle 24 und der mechanischen Größe bzw. Etendue der verwendeten Optiken und des optischen Sensors 25 eine messbare Breite b der Durchströmzelle 21 begrenzt. Die messbare Bereite b kann auf etwa 30 mm begrenzt sein. Eine Pfadlänge h der Durchströmzelle 21, d.h. die vom Licht zwischen den planparallelen Wänden 22, 23 zurückzulegende Wegstrecke, ist ebenfalls limitiert, weil sonst die optische Schichtdicke der Probe zu dick würde für eine erfolgreiche Transmissions-messung. Die Pfadlänge h kann dabei auf etwa 10 mm begrenzt sein.

Diese optischen und geometrischen Restriktionen in Verbindung mit der Dichte des Probenmaterials sowie der maximal erzielbaren Fördergeschwindigkeit des Probenmaterials durch die Durchströmzelle 21, welche vom Maximaldruck abhängt, ab welchem es zum Austreten von Wasser aus dem Probenmaterial kommt, beschränken die Größenordnung des Massenstroms des zugeführten Messstroms 17.

Repräsentanz der NIR-Probe bedeutet für ein partikuläres Material wie das Häckselgut eines Feldhäckslers, dass jedes Teilchen T im Gutstrom 5 dieselbe Chance respektive statistische Wahrscheinlichkeit haben muss, im Messstrom zu landen. Diese Chance ist unabhängig von der Teilchengröße oder anderen mechanischen Eigenschaften des Teilchens. Mit anderen Worten bedeutet Repräsentanz das Vermeiden nicht repräsentativer Stichproben.

Zusätzlich zur Repräsentanz muss die NIR-Probe eine ausreichende statistische Güte aufweisen, d.h. der Messstrom multipliziert mit der Messzeit muss, um praktisch nützlich zu sein, auch ausreichend durchmischt sein, um die statistische Variabilität in ihrer Zusammensetzung kleiner zu machen, als die Wiederholgenauigkeit der NIR-Messvorrichtung. Würde beim Ernten eines ideal homogenen Feldes eine konsekutive Serie von zwanzig Messresultaten betrachtet, aufgenommen mit z.B. 1 Hz, also über insgesamt 20 Sekunden Messzeit, dann sollte die Varianz der erhaltenen Ergebnisse um ihren Mittelwert, welcher im Falle von Repräsentanz, d.h. kein Bias, der "wahre" Mittelwert ist, nicht merklich grösser sein als die Wiederholvarianz der Messapparatur selbst.

Durch das vorgeschaltete Zerkleinern des Probestroms 12 durch die Zerkleinerungsvorrichtung 14 kann das Pinhole-Problem signifikant reduziert werden. Ein weiterer Vorteil der Verwendung der Zerkleinerungsvorrichtung 14 ergibt sich, wenn die Durchströmzelle 21 selbstreinigend ausgeführt ist. Der mechanische Druck, den der durch die Durchströmzelle 21 bewegte Messstrom 17 ausübt, verteilt sich gleichmäßiger auf die durchsichtigen Wände 22, 23 der Durchströmzelle 21.

Wie weiter oben bereits zur Teilungsvorrichtung 16 ausgeführt, ist diese dazu eingerichtet, das Verhältnis der Aufteilung in den Messstrom 17 und den Überlaufstrom 18 zu variieren. Dabei kann der Teilungsvorrichtung 16 zusätzlich die Aufgabe zukommen, die im Messstrom 17 enthaltene Anzahl an Teilchen T oder Partikeln P in Abhängigkeit von der Erntegutart anzupassen. Hierzu findet die Regulierung der Fördergeschwindigkeit des Messstromes 17 statt. Zu diesem Zweck kann die Bypass-Vorrichtung 8 respektive die Teilungsvorrichtung 16 eine durch einen Aktor angetriebene Fördervorrichtung umfassen, welche aus dem Gutstrom 5 entnommenes Erntegut der Transmissionsvorrichtung 15 mit einer einstellbaren Fördergeschwindigkeit aktiv zuführt. Bevorzugt kann die Fördervorrichtung als Schraubenförderer oder Schneckenförderer ausgeführt sein. Die Ansteuerung erfolgt automatisch durch die Steuereinheit 10. Alternativ oder zusätzlich kann auch die Abzweigungsvorrichtung 13 eine durch einen Aktor angetriebene Fördervorrichtung umfassen.

Wie weiter oben ausgeführt, besteht eine Anforderung an die Repräsentanz der NIR-Probe, d.h. jedes Teilchen T bzw. jeder Partikel P, egal ob klein oder groß und welche anderen Eigenschaften dieser hat, muss dieselbe Chance haben in den Probestrom 12 zu gelangen. Die Abzweigungsvorrichtung 13, die den Probestrom repräsentativ abzweigt, kann als eine - nicht dargestellte - einfache Öffnung im Auswurfkrümmer 7 ausgeführt sein. Eine andere Vorgehensweise, welches die Repräsentanz unter allen Betriebszuständen besser erreicht und außerdem einen steuerbaren Teilungsfaktor ermöglicht, kann eine - nicht dargestellte - quer zur Gutstromrichtung am Dach des Auswurfkrümmers 7 angebrachte Schneckenschraube sein.

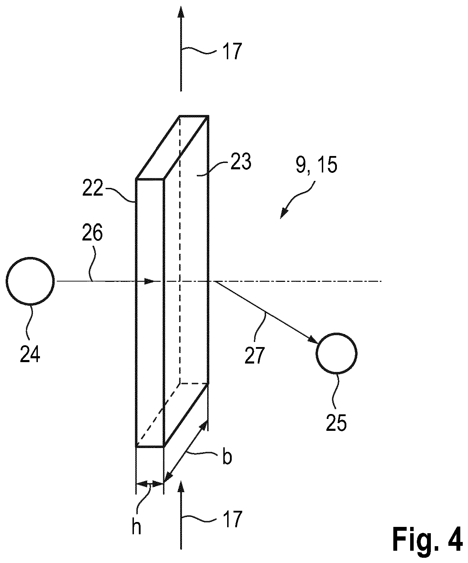

Die Darstellung in Fig. 4 zeigt schematisch eine NIR-Messvorrichtung 9 mit einer nach dem Dunkelfeldprinzip arbeitenden Transmissionsvorrichtung 15. Die nach dem Dunkelfeldprinzip arbeitende Transmissionsvorrichtung 15 als eine Ausführungsform der NIR-Messvorrichtung 9 hat den Vorteil, dass von dem wenigstens einen optischen Sensor 25 Transmissionslicht 27 nur dann empfangen wird, wenn sich Probenmaterial in der Durchströmzelle 21 befindet und deshalb eine Lichtstreuung vorliegt. Vorteil dieser Lösung ist die vollständige Eliminierung des Pinhole-Effektes, d.h. diese Anordnung ist auch bei größeren Teilchen T oder Partikeln P einsetzbar, was insbesondere bei Analyse von Mais der Fall ist.

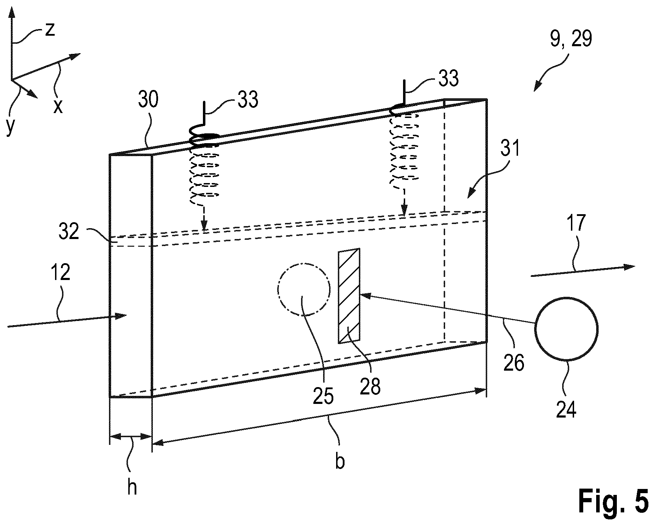

Fig. 5 stellt schematisch eine als Sphären-Transmissionsvorrichtung 29 ausgeführte NIR-Messvorrichtung 9 dar. Die Sphären-Transmissionsvorrichtung 29 umfasst eine in Quererrichtung y, bzw. gemäß der dargestellten, um 90° geschwenkten Orientierung in Hochrichtung z, überdimensionierte Durchströmzelle 30, in der eine federbelastete Anordnung 31 zur Verdichtung des zugeführten Probestroms 12 angeordnet ist. Im Unterschied zu den beiden vorangehend beschriebenen Ausführungsformen der NIR-Messvorrichtung 9, wird auf die Teilungsvorrichtung 16 verzichtet. Der durch die Zerkleinerungsvorrichtung 14 bearbeitete Probestrom 12 wird vollständig der Durchströmzelle 30 der Sphären-Transmissionsvorrichtung 29 zugeführt.

Die federbelastete Anordnung 31 dient dazu, auf den zugeführten Probestrom 12 zu reagieren, welcher einen definierten Massenstromwert überschreitet. Überschreitet der Probestrom einen für die Repräsentanz und statistische Güte definierten Massenstromwert, erfährt die federbelastete Anordnung 31 durch den Messstrom 17 eine Auslenkung senkrecht zur Durchströmungsrichtung. Die von der federbelasteten Anordnung 31 ausgeübte Druckkraft minimiert das Pinhole-Problem, indem das in die Durchströmzelle 30 eintretende Probenmaterial verdichtet wird. Die federbelastete Anordnung 31 kann als ein plattenförmiges Bauteil 32 ausgeführt sein, welches sich in Längsrichtung x und Querrichtung y der Durchströmzelle 30 erstreckt. Das plattenförmige Bauteil 32 bildet zuführseitig der Durchströmzelle 30 eine obere Begrenzung des Messstroms 17. Auf seiner dem Messstrom 17 abgewandten Oberseite des plattenförmigen Bauteils 32 sind hier und vorzugsweise Druckfedern 33 angeordnet, deren Federkraft in Querrichtung y auf das Probenmaterial respektive den Messstrom 17 einwirkt.

Dabei kann der durch die optische Strahlungsquelle 24 erzeugte Beleuchtungsfleck 28 nur einen Teilbereich der Durchströmzelle 31 bestrahlen, wie in Fig. 5 angedeutet, welcher sich in Abhängigkeit vom zugeführten Probestrom 12 stets unterhalb der federbelasteten Anordnung 31 befindet. Der Beleuchtungsfleck 28 befindet sich nur in dem Teil der Durchströmzelle 30, welcher immer mit Probenmaterial gefüllt ist. D.h. die Transmissionsmessung passiert nur in dem Teil der Durchströmzelle 30, welcher ausreichend mit Probenmaterial gefüllt ist.

Das Probenmaterial in der Durchströmzelle 30 kann diese fortlaufend als Probestrom 12 passieren oder intermittierend, d.h. die Zuführung des Probestroms 12 wird während der Transmissionsmessung unterbrochen. Dies hat in Verbindung mit der federbelasteten Anordnung 31 den zusätzlichen Effekt, dass eine optische Teilung bewirkt wird. Indem der Beleuchtungsfleck 28 nur den Teil der Durchströmzelle 30, welcher immer mit Probenmaterial gefüllt ist, bestrahlt, kann erreicht werden, dass im Wesentlichen konstante Bedingungen in der Durchströmzelle 30 vorliegen, um die Anforderungen an Repräsentanz und statistische Güte der Probe zu gewährleisten.

Des Weiteren kann die Transmissonsvorrichtung 9 dazu eingerichtet sein, von der Strahlungsquelle 24 ausgesandtes Licht 26 und/oder auf der Lichtaustrittsseite austretendes transmittierendes Licht 27 optisch zu mischen. Zur Minimierung spektraler Fehler kann vorgesehen sein, die Lichtaustrittsfläche, hier die Wand 23, der Durchströmzelle 21 bzw. 31 nicht direkt, z.B. auf den Eingangsspalt eines Spektrographen, abzubilden, sondern optisch zu mischen, so dass die unter Umständen inhomogene Lichtverteilung in der Ebene der Lichtaustrittsfläche in eine uniforme Verteilung in der Ebene des Eintrittsspaltes gemischt wird. Für die optische Mischung können beispielsweise eine Köhler-Optik, einen Compound Parabolic-Concentrator, ein Mikrolinsen-Array, Mixerstäbe, oder Streuscheiben eingesetzt werden. Zusätzlich kann auf der Beleuchtungsseite, hier die Wand 22, der Durchströmzelle 21 bzw. 31 der Beleuchtungsfleck 28 auf der Probe eine im Wesentlichen uniforme Beleuchtungsstärke aufweisen. Hierzu können, neben den zur optischen Mischung bereits genannten Komponenten, beispielsweise auch Lampen mit Reflektoren aus Spiegelsegmenten eingesetzt werden.

Allen vorstehend beschriebenen Transmissionsmessvorrichtungen 9 zur Durchführung von on-line Transmissionsmessungen ist gemeinsam, dass eine Silizium-Photodiodenzeile (Si-Photodiodenzeile) verwendet wird, welche kostengünstiger als eine InGaAs-Photodiodenzeile ist. Die Transmissionsmessvorrichtung 9 mit Si-Photodiodenzeile als optischer Sensor 25 arbeitet mit Wellenlängen zwischen 700 Nanometer bis 1050 Nanometer, insbesondere unterhalb von 1 Mikrometer. Die Transmissionsmessung 9 ermöglicht es, gegenüber der Reflexionsmessung eine günstigere Photodiodenzeile einzusetzen, ohne dabei wegen des Wellenlängenbereiches auf die Detektion von Feuchtigkeit beschränkt zu sein, wie dies bei der Reflexionsmessung mit Si-Photodiodenzeile der Fall wäre. Die Transmissionsmessvorrichtung 9 deckt somit neben der Detektion des Feuchtigkeitsgehaltes respektive der Trockenmasse die Detektion weiterer Inhaltsstoffe im Erntegut ab, wie beispielsweise Proteine, Zucker oder Fett.

### Bezugszeichenliste

| | | | |
|---|---|---|---|
| 1 | Erntemaschine | 34 | Geschwindigkeitssensoranordnung |
| 2 | Arbeitsaggregat | B | Bediener |
| 3 | Feldbestand | P | Partikel |
| 4 | Erntegut | T | Teilchen |
| 5 | Gutstrom | x | Längsrichtung |
| 6 | Guttransportweg | y | Querrichtung |
| 7 | Auswurfkrümmer | z | Hochrichtung |
| 8 | Bypassvorrichtung | | |
| 9 | NIR-Messvorrichtung | | |
| 10 | Steuereinheit | | |
| 11 | Benutzerterminal | | |
| 12 | Probestrom | | |
| 13 | Abzweigvorrichtung | | |
| 14 | Zerkleinerungsvorrichtung | | |
| 15 | Transmissionsvorrichtung | | |
| 16 | Teilungsvorrichtung | | |
| 17 | Messstrom | | |
| 18 | Überlaufstrom | | |
| 19 | Rücklaufstrom | | |
| 20 | Behältnis | | |
| 21 | Durchströmzelle | | |
| 22 | Wand | | |
| 23 | Wand | | |
| 24 | Strahlungsquelle | | |
| 25 | Sensor | | |
| 26 | Licht | | |
| 27 | Transmissionslicht | | |
| 28 | Beleuchtungsfleck | | |
| 29 | Sphären-Transmissionsvorrichtung | | |
| 30 | Durchströmzelle | | |
| 31 | Federbelastete Anordnung | | |
| 32 | Plattenförmiges Bauteil | | |
| 33 | Druckfeder | | |

## Patentansprüche

1. Erntemaschine (1) mit zumindest einem Arbeitsaggregat (2) zur Bearbeitung von silierfähigem Erntegut (4), welches die Erntemaschine (1) als ein entlang eines Guttransportweges (6) geführter Gutstrom (5) durchläuft, einer Bypass-Vorrichtung (8), die zur Entnahme und Rückführung eines Probestroms (12) aus dem Gutstrom (5) eingerichtet ist, sowie einer Steuereinheit (10), wobei die Bypass-Vorrichtung (8) eine NIR-Messvorrichtung (9) zur Erfassung von Inhaltsstoffen des entnommenen Probestroms (12) umfasst, wobei die Steuereinheit (10) dazu eingerichtet ist, von der NIR-Messvorrichtung (9) generierte Signale auszuwerten, wobei die NIR-Messvorrichtung (9) als Transmissonsvorrichtung (15, 29) ausgeführt ist, **dadurch gekennzeichnet, dass** der Transmissonsvorrichtung (15, 29) eine Zerkleinerungsvorrichtung (14) vorgeschaltet ist, welche dazu eingerichtet ist, das in dem Probestrom (12) enthaltene Erntegut (4) vor der Zuführung zu der Transmissonsvorrichtung (15, 29) zu zerkleinern, wobei der Transmissonsvorrichtung (15, 29) eine Teilungsvorrichtung (16) zur Aufteilung des Probestroms (12) in einen Messstrom (17) und einen Überlaufstrom (18) vorgeschaltet ist, wobei die Teilungsvorrichtung (16) dazu eingerichtet ist, das Verhältnis der Aufteilung in den Messstrom (17) und den Überlaufstrom (18) zu variieren.

2. Erntemaschine (1) nach Anspruch 1, **dadurch gekennzeichnet, dass** die Transmissionsvorrichtung (15) mindestens eine optische Strahlungsquelle (24), insbesondere Lichtquelle, und mindestens einen optischen Sensor (26), insbesondere Lichtsensor, aufweist.

3. Erntemaschine (1) nach Anspruch 2, **dadurch gekennzeichnet, dass** die Bypass-Vorrichtung (8) zumindest eine von dem Probestrom (12) durchströmte Durchströmzelle (21, 30) umfasst, welche zumindest abschnittsweise zwischen der mindestens einen optischen Strahlungsquelle (24) und dem mindestens einen optischen Sensor (26) angeordnet ist.

4. Erntemaschine (1) nach Anspruch 1, **dadurch gekennzeichnet, dass** ein aus dem Messstrom (17) und dem Überlaufstrom (18), nur dem Messstrom (17) oder nur dem Überlaufstrom (18) bestehender Rücklaufstrom (19) einem an der Erntemaschine (1) lösbar angeordneten Behältnis (20) zuführbar sind, dessen Probeninhalt einer "at-line" Analyse unterziehbar ist.

5. Erntemaschine (1) nach einem der vorangehenden Ansprüche, **dadurch gekennzeichnet, dass** die Bypass-Vorrichtung (8) dazu eingerichtet ist, den Volumenstromanteil des entnommenen Probestroms (12), insbesondere während der Durchführung der Messung, zu verändern.

6. Erntemaschine (1) nach einem der vorangehenden Ansprüche, **dadurch gekennzeichnet, dass** die Transmissionsvorrichtung (15) nach dem Dunkelfeldprinzip arbeitet, als Sphären-Transmissionsvorrichtung (29) oder mit zu planparallelen Wänden (22, 23) der Durchströmzelle (21) senkrecht orientierter optischer Strahlungsquelle (24) und optischem Sensor (26) ausgeführt ist.

7. Erntemaschine (1) nach einem der Ansprüche 3 bis 6, **dadurch gekennzeichnet, dass** in der Durchströmzelle (30) eine federbelastete Anordnung (31) zur Verdichtung des zugeführten Probestroms (12) angeordnet ist.

8. Erntemaschine (1) nach Anspruch 7, **dadurch gekennzeichnet, dass** ein durch die optische Strahlungsquelle (24) erzeugter Beleuchtungsfleck (28) nur einen Teilbereich der Durchströmzelle (30) bestrahlt, welcher sich in Abhängigkeit vom zugeführten Probestrom (12) stets unterhalb der federbelasteten Anordnung (31) befindet.

9. Erntemaschine (1) nach einem der vorangehenden Ansprüche, **dadurch gekennzeichnet, dass** die Bypass-Vorrichtung (8) eine durch einen Aktor angetriebene Fördervorrichtung umfasst, welche den aus dem Gutstrom (5) entnommenen Probestrom (12) der Transmissionsvorrichtung (15, 29) mit einer einstellbaren Fördergeschwindigkeit aktiv zuführt.

10. Erntemaschine nach Anspruch 9, **dadurch gekennzeichnet, dass** der Transmissionsvorrichtung (15, 29) zumindest eine optische Geschwindigkeitssensoranordnung (34) vorgeschaltet ist, welche zur Überwachung der Fördergeschwindigkeit des Probestroms (12) eingerichtet ist.

11. Erntemaschine (1) nach einem der Ansprüche 3 bis 10, **dadurch gekennzeichnet, dass** die optische Strahlungsquelle (24) weißes Licht oder monochromatisches Licht aussendet, wobei zwischen der Strahlungsquelle (24) und der Durchströmzelle (21, 30) ein Monochromator oder zwischen der Durchströmzelle (21, 30) und dem optischen Sensor (26) ein Spektrometer angeordnet ist.

12. Erntemaschine (1) nach Anspruch 11, **dadurch gekennzeichnet, dass** die Transmissonsvorrichtung (15, 29) dazu eingerichtet ist, von der Strahlungsquelle (24) ausgesandtes Licht (26) und/oder auf der Lichtaustrittsseite der Durchströmzelle (21, 30) austretendes transmittierendes Licht (27) optisch zu mischen.

13. Verfahren zur Analyse von von einer Erntemaschine (1) aufgenommenem silierfähigen Erntegut (4), welches die Erntemaschine (1) als ein entlang eines Guttransportweges (6) geführter Gutstrom (5) durchläuft, wobei ein Probestrom (12) durch eine Bypass-Vorrichtung (8) aus dem Gutstrom (5) entnommen und diesem wieder zugeführt wird, wobei der durch die Bypass-Vorrichtung (8) entnommene Probestrom (12) einer NIR-Messvorrichtung (9) zur Erfassung von Inhaltsstoffen zugeführt wird, wobei die von der NIR-Messvorrichtung (9) generierten Signale von einer Steuereinheit (10) der Erntemaschine (1) ausgewertet werden, wobei zur Analyse des Probestroms (12) eine als Transmissonsvorrichtung (15, 29) ausgebildete NIR-Messvorrichtung (9) verwendet wird, wobei das Verfahren **dadurch gekennzeichnet ist, dass** der Transmissionsvorrichtung (15, 29) der Erntemaschine (1) eine Zerkleinerungsvorrichtung (14) vorgeschaltet ist, welche dazu eingerichtet ist, das in dem Probenstrom (12) enthaltene Erntegut (4) vor der Zuführung zu der Transmissionsvorrichtung (15, 29) zu zerkleinern, wobei der Transmissionsvorrichtung (15, 29) eine Teilungsvorrichtung (16) zur Aufteilung des Probestroms (12) in einen Messstrom (17) und einen Überlaufstrom (18) vorgeschaltet ist, wobei die Teilungsvorrichtung (16) dazu eingerichtet ist, das Verhältnis der Aufteilung in den Messstrom (17) und den Überlaufstrom (18) zu variieren.

## Claims

1. A harvesting machine (1) with at least one working assembly (2) for processing harvested material (4) which can be made into silage and which passes through the harvesting machine (1) as a flow of material (5) guided along a material transport path (6), a bypass device (8) which is configured for removing and returning a sample flow (12) of the flow of material (5), as well as with a control unit (10), wherein the bypass device (8) comprises a NIR measuring device (9) for detecting constituents of the removed sample flow (12), wherein the control unit (10) is configured to analyse signals generated by the NIR measuring device (9), wherein the NIR measuring device (9) is constructed as a transmission device (15, 29), **characterized in that**
a comminuting device (14) is located upstream of the transmission device (15, 29) and is configured to comminute the harvested material (4) contained in the sample flow (12) before being supplied to the transmission device (15, 29), wherein a dividing device (16) for splitting the sample flow (12) into a measuring flow (17) and a spillover flow (18) is located upstream of the transmission device (15, 29), wherein the dividing device (16) is configured to change the ratio of the split into the measuring flow (17) and the spillover flow (18).

2. The harvesting machine (1) according to claim 1, **characterized in that** the transmission device (15) has at least one optical source of radiation (24), in particular a light source, and at least one optical sensor (26), in particular a light sensor.

3. The harvesting machine (1) according to claim 2, **characterized in that** the bypass device (8) comprises at least one flowthrough cell (21, 30) through which the sample flow (12) passes and which is disposed, at least in sections thereof, between the at least one optical source of radiation (24) and the at least one optical sensor (26).

4. The harvesting machine (1) according to claim 1, **characterized in that** out of a return flow (19) consisting of the measuring flow (17) and the spillover flow (18), only the measuring flow (17) or only the spillover flow (18) can be supplied to a container (20) the sample contents of which can undergo an atline analysis and which is detachably disposed on the harvesting machine (1).

5. The harvesting machine (1) according to one of the preceding claims, **characterized in that** the bypass device (8) is configured to change the volumetric flow fraction of the removed sample flow (12), in particular while carrying out the measurement.

6. The harvesting machine (1) according to one of the preceding claims, **characterized in that** the transmission device (15) operates in accordance with the dark field principle, as a sphere transmission device (29) or is constructed with the optical source of radiation (24) and optical sensor (26) orientated at right angles to plane-parallel walls (22, 23) of the flowthrough cell (21).

7. The harvesting machine (1) according to one of claims 3 to 6, **characterized in that** a spring-loaded assembly (31) for compacting the sample flow (12) supplied to the flowthrough cell (30) is disposed therein.

8. The harvesting machine (1) according to claim 7, **characterized in that** an illuminated area (28) generated by the optical source of radiation (24) irradiates only a sub-region of the flowthrough cell (30), the location of which, as a function of the supplied sample flow (12), is always below the spring-loaded assembly (31).

9. The harvesting machine (1) according to one of the preceding claims, **characterized in that** the bypass device (8) comprises a conveying device driven by an actuator which actively supplies the sample flow (12) removed from the flow of material (5) to the transmission device (15, 29) at an adjustable conveying speed.

10. The harvesting machine (1) according to claim 9, **characterized in that** at least one optical speed sensor assembly (34) is located upstream of the transmission device (15, 29) and is configured to monitor the conveying speed of the sample flow (12).

11. The harvesting machine (1) according to one of claims 3 to 10, **characterized in that** the optical source of radiation (24) emits white light or monochromatic light, wherein a monochromator is disposed between the source of radiation (24) and the flowthrough cell (21, 30) or a spectrometer is disposed between the flowthrough cell (21, 30) and the optical sensor (26).

12. The harvesting machine (1) according to claim 11, **characterized in that** the transmission device (15, 29) is configured to optically mix light (26) emitted from the source of radiation (24) and/or transmitted light (27) exiting from the light emission side of the flowthrough cell (21, 30).

13. A method for the analysis of harvested material (4) which can be made into silage picked up by a harvesting machine (1) and which passes through the harvesting machine (1) as a flow of material (5) which is guided along a material transport path (6), wherein a sample flow (12) is removed from the flow of material (5) by a bypass device (8) and returned thereto, wherein the sample flow (12) removed by the bypass device (8) is supplied to a NIR measuring device (9) in order to detect constituents, wherein the signals generated by the NIR measuring device (9) are analysed by a control unit (10) of the harvesting machine (1), wherein a NIR measuring device (9) constructed as a transmission device (15, 29) is used in order to analyse the sample flow (12), wherein the method is **characterized in that** a comminuting device (14) is located upstream of the transmission device (15, 29) and is configured to comminute the harvested material (4) contained in the sample flow (12) before being supplied to the transmission device (15, 29), wherein a dividing device (16) for splitting the sample flow (12) into a measuring flow (17) and a spillover flow (18) is located upstream of the transmission device (15, 29), wherein the dividing device (16) is configured to change the ratio of the split into the measuring flow (17) and the spillover flow (18).

## Revendications

1. Machine de récolte (1) comprenant : au moins un organe de travail (2) destiné à traiter un produit récolté (4) pouvant être ensilé, qui traverse la machine de récolte (1) sous forme de flux de produit (5) guidé le long d'un chemin de transport de produit (6) ; un dispositif de dérivation (8) qui est conçu pour le prélèvement et la réinjection d'un flux d'échantillon (12) dans le flux de produit (5) ; ainsi qu'une unité de commande (10), le dispositif de dérivation (8) comportant un dispositif de mesure NIR (9) destiné à la détection de composants du flux d'échantillon (12) prélevé, l'unité de commande (10) étant conçue pour exploiter des signaux générés par le dispositif de mesure NIR (9), le dispositif de mesure NIR (9) étant réalisé sous forme de dispositif de transmission (15, 29), **caractérisée en ce qu'**un dispositif de broyage (14) est placé en amont du dispositif de transmission (15, 29) et est conçu pour broyer le produit récolté (4) contenu dans le flux d'échantillon (12), avant l'acheminement au dispositif de transmission (15, 29), un dispositif de division (16) étant placé en amont du dispositif de transmission (15, 29) en vue de la séparation du flux d'échantillon (12) en un flux de mesure (17) et un flux de décharge (18), le dispositif de division (16) étant conçu pour faire varier le rapport de la séparation en flux de mesure (17) et flux de décharge (18).

2. Machine de récolte (1) selon la revendication 1, **caractérisée en ce que** le dispositif de transmission (15) présente au moins une source de rayonnement optique (24), notamment une source lumineuse, et au moins un capteur optique (26), notamment un capteur de lumière.

3. Machine de récolte (1) selon la revendication 2, **caractérisée en ce que** le dispositif de dérivation (8) comprend au moins une cellule de passage d'écoulement (21, 30) qui est traversée par le flux d'échantillon (12) et est disposée au moins par portions entre la source de rayonnement optique (24), au nombre d'au moins une, et le capteur optique (26), au nombre d'au moins un.

4. Machine de récolte (1) selon la revendication 1, **caractérisée en ce qu'**un flux de réinjection (19) constitué du flux de mesure (17) et du flux de décharge (18), du seul flux de mesure (17) ou du seul flux de décharge (18), peut être amené à un récipient (20) qui est fixé de manière amovible à la machine de récolte (1) et dont le contenu d'échantillon peut être soumis à une analyse « at-line ».

5. Machine de récolte (1) selon une des revendications précédentes, **caractérisée en ce que** le dispositif de dérivation (8) est conçu pour modifier la part du flux volumique du flux d'échantillon (12) prélevé, notamment au cours de la réalisation de la mesure.

6. Machine de récolte (1) selon une des revendications précédentes, **caractérisée en ce que** le dispositif de transmission (15) fonctionne selon le principe du fond noir, est réalisé comme dispositif de transmission à sphère (29) ou avec une source de rayonnement optique (24), orientée perpendiculairement à des parois (22, 23) planes et parallèles de la cellule de passage d'écoulement (21), et un capteur optique (26).

7. Machine de récolte (1) selon une des revendications 3 à 6, **caractérisée en ce que** dans la cellule de passage d'écoulement (30), il est prévu un agencement (31) sollicité par ressort, destiné à compacter le flux d'échantillon (12) amené.

8. Machine de récolte (1) selon la revendication 7, **caractérisée en ce qu'**une zone d'éclairage (28) générée par la source de rayonnement optique (24) irradie seulement une zone partielle de la cellule de passage d'écoulement (30), qui, en fonction du flux d'échantillon (12) amené, se situe toujours en dessous de l'agencement (31) sollicité par ressort.

9. Machine de récolte (1) selon une des revendications précédentes, **caractérisée en ce que** le dispositif de dérivation (8) comprend un dispositif convoyeur qui est entraîné par un actionneur et achemine le flux d'échantillon (12) prélevé dans le flux de produit (5) au dispositif de transmission (15, 29), activement et avec une vitesse de convoyage réglable.

10. Machine de récolte selon la revendication 9, **caractérisée en ce qu'**au moins un système de capteur de vitesse optique (34) est placé en amont du dispositif de transmission (15, 29) et est conçu pour surveiller la vitesse de convoyage du flux d'échantillon (12).

11. Machine de récolte (1) selon une des revendications 3 à 10, **caractérisée en ce que** la source de rayonnement optique (24) émet de la lumière blanche ou de la lumière monochromatique, un monochromateur étant disposé entre la source de rayonnement (24) et la cellule de passage d'écoulement (21, 30), ou un spectromètre étant disposé entre la cellule de passage d'écoulement (21, 30) et le capteur optique (26).

12. Machine de récolte (1) selon la revendication 11, **caractérisée en ce que** le dispositif de transmission (15, 29) est conçu pour mélanger optiquement la lumière (26) émise par la source de rayonnement (24) et/ou la lumière (27) de transmission qui sort sur le côté de sortie de lumière de la cellule de passage d'écoulement (21, 30).

13. Procédé d'analyse un produit récolté (4) pouvant être ensilé, qui est ramassé par une machine de récolte (1) et traverse la machine de récolte (1) sous forme de flux de produit (5) guidé le long d'un chemin de transport de produit (6), selon lequel un flux d'échantillon (12) est prélevé dans le flux de produit (5) par un dispositif de dérivation (8) et est renvoyé dans celui-ci, le flux d'échantillon (12) prélevé par le dispositif de dérivation (8) étant amené à un dispositif de mesure NIR (9) en vue de la détection de composants, les signaux générés par le dispositif de mesure NIR (9) étant exploités par une unité de commande (10) de la machine de récolte (1), sachant qu'un dispositif de mesure NIR (9) réalisé comme dispositif de transmission (15, 29) est utilisé pour l'analyse du flux d'échantillon (12), le procédé étant **caractérisé en ce qu'**un dispositif de broyage (14) est placé en amont du dispositif de transmission (15, 29) de la machine de récolte (1) et est conçu pour broyer le produit récolté (4) contenu dans le flux d'échantillon (12), avant l'acheminement au dispositif de transmission (15, 29), un dispositif de division (16) étant placé en amont du dispositif de transmission (15, 29), en vue de la séparation du flux d'échantillon (12) en un flux de mesure (17) et un flux de décharge (18), le dispositif de division (16) étant conçu pour faire varier le rapport de la séparation en flux de mesure (17) et flux de décharge (18).
